# EUROPÄISCHE PATENTANMELDUNG

(11) **EP 0 822 407 A2**
(43) Veröffentlichungstag der Anmeldung: **04.02.1998**
(21) Anmeldenummer: 97111683.5
(22) Anmeldetag: 10.07.1997
(51) Int. Cl.: G01N 21/55

(54) **Kompositmaterial zur Resonanzverstärkung optischer Signale und Verfahren zu dessen Herstellung**

(30) Priorität: 29.07.1996 DE 19630538
(71) Anmelder: Forschungszentrum Rossendorf e.V., 01474 Schönfeld-Weissig (DE)
(72) Erfinder: Pham, Minh Tan, Dr., 01324 Dresden (DE); Steiner, Gerald, Dr., 8340 Schwarzenberg (DE); Salzer, Reiner, Prof. Dr., 04463 Grosspösna (DE)

(57) **Zusammenfassung**

Die Erfindung betrifft ein Kompositmaterial zur Resonanzverstärkung optischer Signale an strukturell inhomogenen, mit metallischen Partikeln ausgestatteten Oberflächen sowie ein Verfahren zur Herstellung dieses Kompositmaterials.
Das Phänomen der Resonanzverstärkung optischer Signale in einem solchem Kompositmaterial ist auf die optische Anregung von lokalen, dipolaren Oberflächenplasmonen zurückzuführen und findet potentielle Anwendung in verschiedenen Bereichen, u.a. in elekro-optischen Bauelementen, Speichermedien, der Solar- und Lasertechnik sowie der spektroskopisch-chemischen Analytik.
Erfindungsgemäß ist das Kompositmaterial gekennzeichnet durch eine Oberflächenmorphologie mit metallischen Partikeln einheitlicher Teilchenform, welche lateral zu matrix-fixierten quasi-zweidimensionalen Arrays von Oberflächenheterogenitäten angeordnet sind und vertikal in der planar ausgebildete Dünnfilmmatrixphase verankert sind. Ein solches Kompositmaterial wird erfindungsgemäß durch ein Verfahren hergestellt, bei welchem die Matrixoberfläche mit einem Ionenstrahl der Zielmetallkomponente beschossen wird, wodurch es zu einer spontanen Bildung, Anordnung und Verankerung der metallischen Partikel kommt
Das Kompositmaterial zeichnet sich in besonderer Weise durch die hohe Stabilität, Reproduzierbarkeit, Fähigkeit der Wiederverwenbarkeit und Verkopplungsfähigkeit mit verschiedenen Strukturen aus. Das Verfahren zur Herstellung ist einfach und flexibel, gestattet die Gewinnung großflächiger Objekte, wie auch die Mikrostrukturierung und Integration, und zeichnet sich durch eine hohe Variabilität in Auswahl und Kombination von Metall- und Matrixmaterial aus.

## Beschreibung

Die millionenfache Verstärkung optischer Signale an strukturell inhomogenen Oberflächen von Metallen, insbesondere von Ag, Au und Cu ist aus [M. Moskovits, Rev. Mod. Phys. 57 (1985) 783-826; A. Otto, I. Mrozek, H. Grabhorn, W. Akerman, J. Phys. Condens. Matt. 4 (1992) 1143-1212] bekannt. Das Phänomen als solches ist auf die optische Anregung von lokalen, dipolaren Oberflächenplasmonen zurückzuführen und findet potentielle Anwendung in verschiedenen Bereichen, u.a. in elektro-optischen Bauelementen, Speichermedien, der Solar- und Lasertechnik sowie der spektroskopisch-chemischen Analytik.

Bekannt ist vor allem die Kretschmann - Konfigurationen [Jorgenson,R.C., Yee,S.S., A fiber -optic chemical sensor based on surface plasmon resonance, Sensors and Actuators B, 12 (1993) 213-220], wo durch das evaneszente Feld in dünnen Silber- oder Goldschichten Plasmonen angeregt werden. Die Plasmonenresonanz ist u.a. abhängig von der Wellenlänge und vom Einfallswinkel des anregenden Lichtes. Eine auf der metallischen Schicht aufliegende oder anhaftende Substanz führt zur Verschiebung der Resonanz. Diese Verschiebung wird zur Detektion der Substanz genutzt [Raether,H., Surface Plasmons, Springer Verl. Berlin-Heidelb.,1992; Pockrand,I., Surface Plasma Oscillations at Silver Surfaces with thin transparent and absorbing Coatings, Surface Science, 72 (1978), 577-588].

Die Oberflächen - Plasmonen - Resonanz wird vielfältig in der Analytik eingesetzt [Jorgenson,R.C., Yee,S.S., Control of the Dynamic range and sensitivity of a surface plasmon resonance based fiber optic sensor, Sensors and Actuators A, 43 (1994), 44-48; Liedberg, B., Lundström, I., Stenberg, E., Principles of biosensing with an extended coupling matrix and surface plasmon resonance, Sens.a.Act., B, 11 (1993), 63-72]. Sie gestattet die Messung von geringsten Änderungen der komplexen Brechungsindexes und der Schichtdicke der Substanz. Die zur Erzeugung der Plasmonen notwendige metallische Schicht wird bislang durch thermisches Bedampfen, Sputtern oder reaktives Abscheiden hergestellt. Typische Schichtdicken liegen bei ungefähr 50nm.

Die vielfältigen Probleme bei der Bereitstellung von Materialien mit den erforderlichen, speziell nanometer-strukturierten Metalloberflächen steht einer breiten praktischen Anwendung bisher entgegen, obwohl verschiedene Materialien, die unter Anwendung spzieller Technologien und Verfahren hergestellt werden, bekannt sind.

Bekannt sind z.B. Kolloidlösungen von Ag oder Au, die mit relativ einfachen Mitteln in nahezu einheitlicher Teilchenform und -größe herstellbar sind [R. K. Chang, T. E. Furtak, Eds., Surface Enhanced Raman Scattering, Plenum, New York, 1982]. Nachteilig und kritisch ist die Instabilität, die ihre Ursache in einer unkontrollierbaren Aggregation der Kolloidpartikel hat. Hinzu kommt die Unhandhabbarkeit mit einem Fluidmedium, insbesondere in bezug auf die Miniaturisierung und Integration. Bekannterweise wird versucht, durch Einlagerung von Kolloidpartikeln in eine Zellulosematrix (z.B. Filterpapier), die Stabilität zu verbessern [US Patent 4674878 (1987)]. Auch die über eine Kovalenzbindung erfolgte Fixierung von Kolloidpartikeln an eine Festkörperoberfläche ist bekannt [R. G. Freeman, K. C. Grabar, K. J. Allison, R. M. Bright, J. A. Davis, A. P. Guthrie, M. B. Hommer, M. A. Jackson, P. C. Smith, D.G. Walter,M. J. Natan, Science 267 (1995) 1629-1632].

Bekannt sind weiterhin Metalloberflächen, vorwiegend von Ag, die elektrochemisch aufgerauht sind [J. E. Pemberton, M. M. Girand, J. Electoanal. Chem. 217 (1987) 79-92]. Die so hergestellten Oberflächenstrukturen sind im allgemeinen schwer definierbar und charakterisierbar. Ein weiteres Problem ist die Instabilität, da die im elektrochemischen Behandlungsprozeß gebildeten Metallpartikel keine feste Bindung zur Oberfläche besitzen. Oberflächenheterogenitäten mit Ag-Inselstrukturen, die mit Hilfe der Dünnfilmtechniken, wie z.B. Vakuumbedampfung und Sputtern hergestellt werden, sind auch bekannt [V.L. Schlegel, T. M. Cotton, Anal. Chem. 63 (1991) 241-247; R. P. Van Duyne, J. C. Hulteen, D. A. Treichel, J. Chem. Phys. 99 (1993) 2101-2115] und sehr populär bei Untersuchungen zur Generation von resonanzverstärkten optischen Signalen. Kritisch ist auch hier die auf die schlechte Haftung zurückzuführende Instabilität, sowie auch die Probleme bezüglich Reproduzierbarkeit, Kalibrierung und Wiederverwendbarkeit.

Die auch bekannten, mittels photolithographischer Technologie hergestellten metallischen Oberflächenstrukturen [US Patent 4 407 695 (1983)] im nm-µm-Bereich sind außerordentlich kostenaufwendig und in bezug auf eine breite praktische Anwendung ungeeignet.

Der Erfindung liegt nun die Aufgabe zugrunde, ein Kompositmaterial zur Resonanzverstärkung optischer Signale zu schaffen, bei dem die oben angeführten Probleme der Langzeitstabilität, Wiederverwendbarkeit und Reproduzierbarkeit ausgeschlossen sind. Ein wichtiger Aspekt dabei ist die Herstellbarkeit nach derzeitig verfügbaren Standardtechnologien. Der Erfindung obliegt deshalb auch die Aufgabe, ein Verfahren zur Herstellung des genannten Kompositmaterials bereitzustellen, mit dem dieses für eine breite Anwendungsoption kostengünstig und einfach herstellbar ist.

Die Aufgabe wird erfindungsgemäß durch ein Kompositmaterial aus metallischen Partikeln, einer Matrixphase und einem Substrat gelöst, welche zu einer stabilisierten Dünnfilmstruktur aus in die Matrix inkorporierten Metallpartikeln derart konfiguriert sind, daß die Metallpartikel lateral zu quasi-zweidimensionalen, durch die Matrix fixierten Arrays von Oberflächenheterogenitäten angeordnet sind und vertikal verankert in die Matrixphase hineinreichen, wobei die Matrix entweder kompakt ist, oder auf einem als Stützfläche dienenden Festkörpersubstrat aufliegt. Die Metallpartikel werden vorzugsweise aus der Gruppe der Münzenmetalle, wie z.B. Ag, Au und Cu oder Pt ausgewählt, obwohl auch andere Metalle einsetzbar sind. Sie sind von einheitlicher, vorzugsweise sphärischer oder sphäroidaler Teilchenform und besitzen einen Bereich für die Teilchengröße, die zwischen nm und µm liegt. Die Matrix ist vorzugsweise als Dünnfilm ausgebildet und wird aus den Materialgruppen Isolator, Halbleiter oder optisch transparenten Materialien ausgewählt. Typische Beispiele sind SiO₂, Si₃N₄, Ta₂O₅, TiO₂, Si, Glas. Das Substratmaterial ist frei wählbar, und kann aus demselben Material wie das der Matrix bestehen. Die Matrixdünnfilme und deren Kopplung an das Substrat werden durch Standardtechniken, wie CVD, Sputtern und thermische Oxidation hergestellt.

Weiterhin wird die Aufgabe bezüglich des Verfahrens zur Herstellung des genannten Kompositmaterials dadurch gelöst, daß die Oberfläche der Matrix mit einem Ionenstrahl der Zielmetallkomponente beschossen wird. Die hohe Relaxationsgeschwindigkeit des Ionenbeschußprozesses, die extrem geringe, durch die Metall-Matrix-Kombination wählbare Löslichkeit des Metalls in der Matrix und die träge Reaktion des Metalls mit den Matrixkomponenten, z.B. Sauerstoff, führen in einem wegen der Zeitunaufgelöstheit spontan erscheinenden Prozeß zur Bildung und Anordnung von sphärischen oder sphäroidalen Metallpartikeln und deren Verankerung in das Matrixnetzwerk. Die Zieloberflächenstruktur mit Metallpartikeln ist quantitativ einstellbar mit Hilfe der Prozeßparameter des Ionenbeschusses. Exponierte wie auch unter eine definierte Matrixdeckschicht vergrabene Metallpartikel können in einem Einschrittprozeß durch Auswahl einer geeigneten Ionenenergie erreicht werden. Der Energiebereich ist angebbar für eine beabsichtigte Metall-Matrix-Kombination auf der Basis der bekannten z.B. nach dem TRIM-Verfahren berechneten Ionenreichweite [J. P. Biersack, L. G. Haggmark, Nucl. Instrum. Methods 174 (1980) 275]. Wenn z.B. Ag als Zielmetall verwendet werden soll, werden für eine Matrix aus Ta₂O₅ Energien vorzugsweise zwischen 80 und 130 keV und für Matrix aus SiO₂, Si₃N₄, Si oder Glas Energien unter 60 keV verwendet. Die Partikelgröße und -konzentration sind ebenfalls einstellbar mit Hilfe der Ionendosis und der Ionenstromdichte. Für den Bereich der Partikelgröße zwischen 10 und 100 nm werden vorzugsweise Ionendosen von 10¹⁶ bis 5*10¹⁷ Ionen/cm² und Stromdichten von 0,2 bis 2 µA/cm² verwendet.

Mit der Erfindung ist es gelungen, ein Kompositmaterial zur Resonanzverstärkung von optischen Signalen bereitzustellen mit dem besonderen Vorteil der Stabilität und Definiertheit der Oberflächenstrukturen mit Metallpartikeln im Bereich der Nano-Mikrometer-Teilchengröße, die sich aus der lateralen Fixierung und vertikalen Verankerung in das Matrixnetzwerk ergibt. Für chemisch-anlytische Anwendungen, bietet sich die Fähigkeit der Wiederverwendbarkeit, der sicheren Kalibrierung und Reproduzierbarkeit an, die bislang ein kritisches Problem bei konventionellen Materialien darstellen. Ein weiterer vorteilhafter Aspekt der Erfindung resultiert aus dem Herstellungsverfahren. Die Partikelbildung und deren Verankerung an eine Matrix erfolgt in situ in einem Einschriftprozeß, mit dem exponierte wie auch vergrabene Oberflächenheterogenitäten für eine frei wählbare Kombination Metall-Matrix realisierbar sind. Großflächige Oberflächenstrukturen, wie auch Integration und Mikrostrukturierung sind erreichbar mittels des erfindungsgemäßen Verfahrens. Potentielle Anwendungen sind in Bereichen der spektroskopisch-chemischen Analytik und Sensorik für Biomedizin und Biomaterialien, der elektro-optischen Systeme, der Laser- und Solartechnik zu sehen.

Nachfolgend werden bevorzugte Ausführungsbeispiele des erfindungsgemäßen Kompositmaterials und dessen Herstellungsverfahrens näher erläutert. In den Figuren zeigen, jeweils bezogen auf die Zählung der Ausführungsbeispiele:
- Fig. 1 und Fig. 2: Schnittdarstellungen des Kompositmaterials
- Fig. 1a: AFM-Aufnahmen der Oberfläche des Kompositmaterials
- Fig. 1b: Querschnittprofillinien von Fig. 1a
- Fig. 1c: die Partikelgrößenverteilung für eine Oberfläche nach Fig. 1a für jeweils zwei verschiedene Implantationsdosen
- Fig. 2 a, Fig. 3 a und Fig. 4: AFM-Aufnahmen der Oberflächen des Kompositmaterials
- Fig. 3 b: die AFM-Aufnahme der Oberfläche nach Fig. 3a nach Entfernung einer obersten Deckschicht und Partikelfreilegung
- Fig. 5: die schematische Darstellung einer Meßanordnung mit Kontakt des Kompositmaterials mit einem Analyten
- Fig. 6: die Schnittdarstellung des als optische Faser gestalteten Kompositmaterials

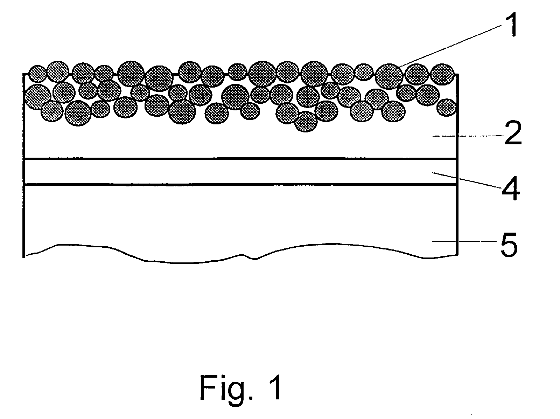

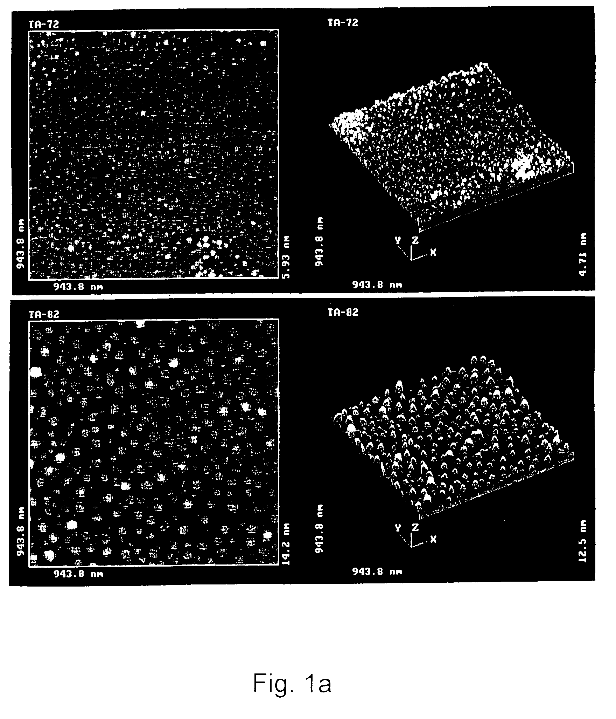

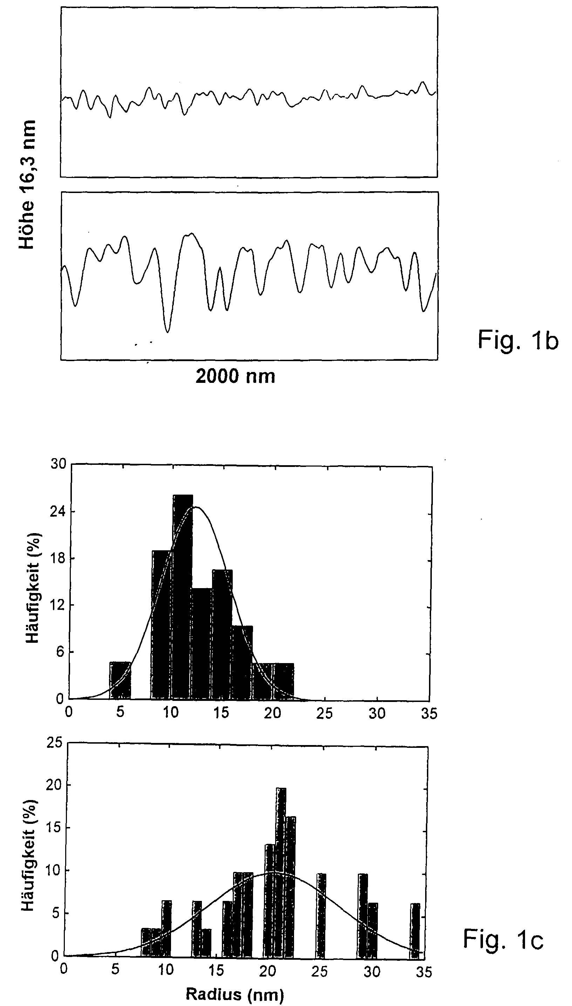

Das erste Beispiel bedient sich als Ausgangsmaterial einer kommerziell erhältlichen, standardmäßig in der Halbleitertechnologie eingesetzten Siliziumscheibe 5 mit einem Durchmesser von 100 mm und einer Schichtdicke von 0,4 mm, welche vom p-Typ ist und eine (100)-Kristallorientierung und einen spezifischen Widerstand von 12 bis 20 Ohm cm aufweist. In einem ersten Verfahrensschritt wird die Si-Scheibe durch thermische Oxidation mit einer 70 nm dicken SiO2-Schicht, als Haftschicht 4 fungierend, überzogen. Darauf folgend wird eine ca. 150 nm dicke Ta₂O₅-Schicht, den eigentlichen Matrixfilm 2 darstellend, durch reaktives Sputtern abgeschieden. In einem anschließenden Prozeßschritt werden Ag⁺-Ionen bei einer Energie von 80 keV in die Matrixschicht implantiert. Die ausgewählte Ionenenergie ermöglicht die Hauptmenge an Ag unmittelbar an der Oberfläche bis zu einer Tiefe von ca. 20 nm zu deponieren. Der Ionenbeschuß führt zur spontanen Bildung von sphärischen Ag-Partikeln, die sich, verankert in das Matrixnetzwerk, dominierend nahe der Oberfläche der Matrixschicht plazieren. In Fig. 1a-c sind morphologische Charakteristika der Oberflächen des erfindungsgemäßen Kompositmaterials gezeigt, wie sie sich aus Messungen mit Atomic Force Microscopy (AFM) ergaben. AFM-Aufnahmen in 2D- und 3D-Darstellung (Fig. 1a), die zugehörigen Querschnittprofillinien (Fig. 1b) und Partikelgrößenverteilung (Fig. 1c) sind dabei für jeweils 2 unterschiedliche Implantationsdosen, nämlich 2*10¹⁶ und 6*10¹⁶ Ag⁺/cm² dargestellt. Dies demonstriert augenscheinlich die Einstellbarkeit der Oberflächenheterogenität mittels der Implantationsparameter.
Untersuchungen zur Stabilität des erfindungsgemäßen Kompositmaterials, die unter den Einsatzfall simulierenden, aber vielfach kritischeren Bedingungen einer bis zu 60-minütigen Ultraschallbehandlung in verschiedenen Fluiden wie Wasser, Methanol, Äthanol, Azeton oder Benzol erfolgten, zeigten keine meßbaren Veränderungen der in Fig. 1 a-c dargestellten Oberflächencharakteristika.

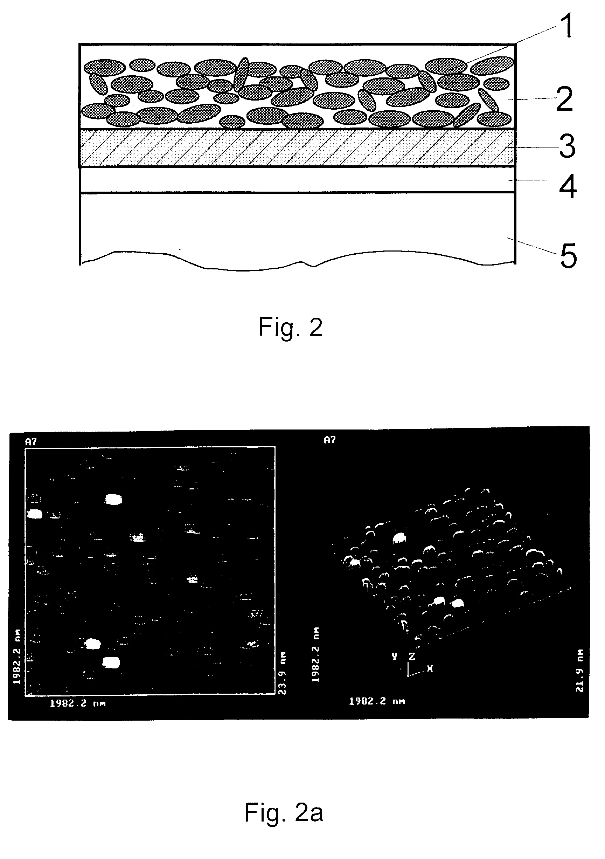

Die Beschreibung des 2. Ausführungsbeispiels bezieht sich auf die in Fig. 2 gezeigte Schnittdarstellung. Das Konzept, das als Dünnfilm ausgebildete Matrixmaterial, in diesem Fall eine 100 nm dicke SiO2-Schicht 2, auf einen die mechanische Stützfunktion ausübende und daher in der geometrischen Abmessung nahezu frei wählbaren Träger zu transferieren, wird ebenso wie im Ausführungsbeispiel 1, fortgeführt. Das Aufbringen der SiO2-Matrix 2 erfolgt durch CVD als letzten Verfahrensschritt in der Vorbereitung der Matrix. Die SiO₂-Matrix schließt sich einer 100 nm dicken, zuvor ebenfalls durch CVD abgeschiedenen Si₃N₄-Schicht 3 an, die als Barriere einen durch Diffusion oder Migration ausgelösten Ag-Transport in die Tiefe verhindern soll. Die weitere Schichtkonfiguration ähnelt der im 1. Ausführungsbeispiel und besteht aus einer durch thermische Oxidation erzeugten SiO₂-Haftschicht 4 auf einem einkristallinen Si-Wafer 5. Damit ist die Matrix-Vorbereitung abgeschlossen. Im nächsten Verfahrensschrift wird die SiO₂-Matrix mit einem Ag-Ionenstrahl bei einer Energie von 58 keV und mit einer Dosis von 6*10¹⁶ Ag⁺/cm² beschossen. Anschließend wird zur Freilegung der Ag-Partikel die SiO₂-Matrixoberfläche durch naßchemisches Ätzen unter Verwendung einer mit NH₄F gepufferten HF-Lösung abgedünnt. Das resultierende Kompositmaterial unterscheidet sich von dem im 1. Ausführungsbeispiel beschriebenen durch die sphäroidale Form der Ag-Partikel, die die Oberflächenmorphologie bestimmen. Die in Fig. 2 a wiedergegebenen AFM-Aufnahmen zeigen dieses Ergebnis. Der Prozeß der hier aus atomaren Bausteinen stattfindenden Ag-Partikelbildung durchläuft, wenn auch in einem anderen Zeitmaßstab gleiche Stadien, wie jener aus einer Gas- oder Flüssigphase: Keimbildung, Keimwachstum und Reifen zu makroskopischen Teilchen, die stark vom Massentransport abhängig sind. Dieser Massentransport wird durch die Stapelung zweier Materialschichten unterschiedlicher Barrierewirkung stark moduliert. Die Nitridschicht besitzt eine ausgeprägte Barrierewirkung, dagegen fehlt bei SiO₂ ein solches Verhalten. Die starke Abbremsung an der Phasengrenze SiO₂ - Si₃N₄ und der implantationsinduzierte Strahlendruck führt zu einem verstärkt lateralen Transport von Ag-Atomen, woraus sich bevorzugtes laterales Wachstum und Bildung von sphäroidalen Partikeln ergeben.

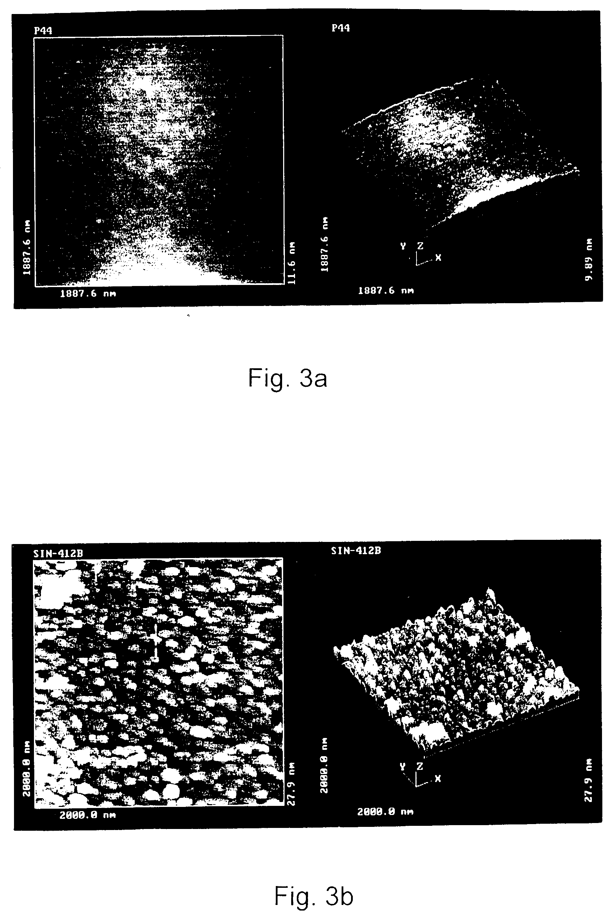

Das 3. Ausführungsbeispiel ist ein Kompositmaterial, dessen Oberflächenbereich derart strukturiert ist, daß Ag-Partikel vergraben unterhalb einer definierten Matrixschichtdicke plaziert sind. Konventionell werden zur Herstellung solcher Strukturen mindestens 2 Verfahrensschritte in 2 verschiedenen Apparaturen mit Probentransferieren benötigt. Das hier beschriebene erfindungsgemäße Verfahren gestattet, in einem Prozeßschritt die Ag-Partikelbildung und deren in situ -Verkoppelung an eine Matrixphase zu realisieren. Auf einem aus einkristallinen Silizium bestehenden planaren Substrat wird durch thermische Oxidation eine 150 nm dicke SiO₂-Matrixschicht erzeugt. In die Matrix werden Ag⁺-Ionen bei 50 keV mit einer Dosis von 6*10¹⁶ Ag⁺/cm² implantiert. Fig. 3 a zeigt die AFM-Aufnahme der Oberfläche des Konpositmaterials. Fig. 3 b ist eine AFM-Aufnahme der Oberfläche nach der durch chemisches Ätzen erfolgten Entfernung einer 6 nm dünnen obersten Oberflächenschicht, welches die vergrabenen Ag-Partikel freilegt.

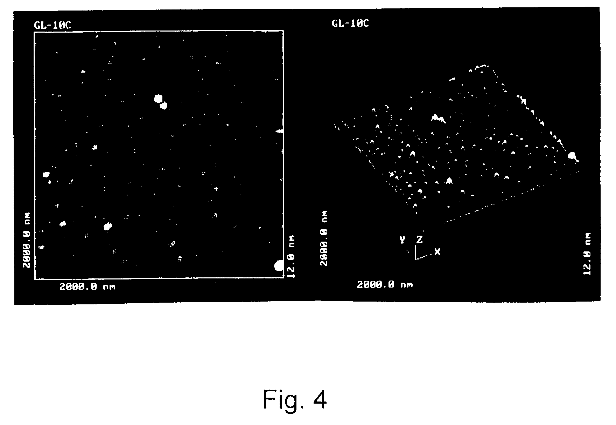

In einem vierten Ausführungsbeispiel wird eine planare, 1 mm dicke und oberflächenpolierte Quarzglasplatte als Matrix verwendet. Die Matrix wird einer Reiniungsprozedur unterworfen, die aus einer Ultraschallbehandlung in Aceton und dann in Äthanol für jeweils 10 min. besteht. In einem weiteren Prozeßschritt werden Ag⁺-Ionen in die Glasoberfläche implantiert, wobei die Implantation zuerst bei einer Energie von 58 keV mit einer Dosis von 6*10¹⁶ Ag⁺/cm² und anschließend bei 40 keV mit 4.10¹⁶ Ag⁺/cm² erfolgt. Fig. 4 zeigt die AFM-Aufnahme der Oberfläche.

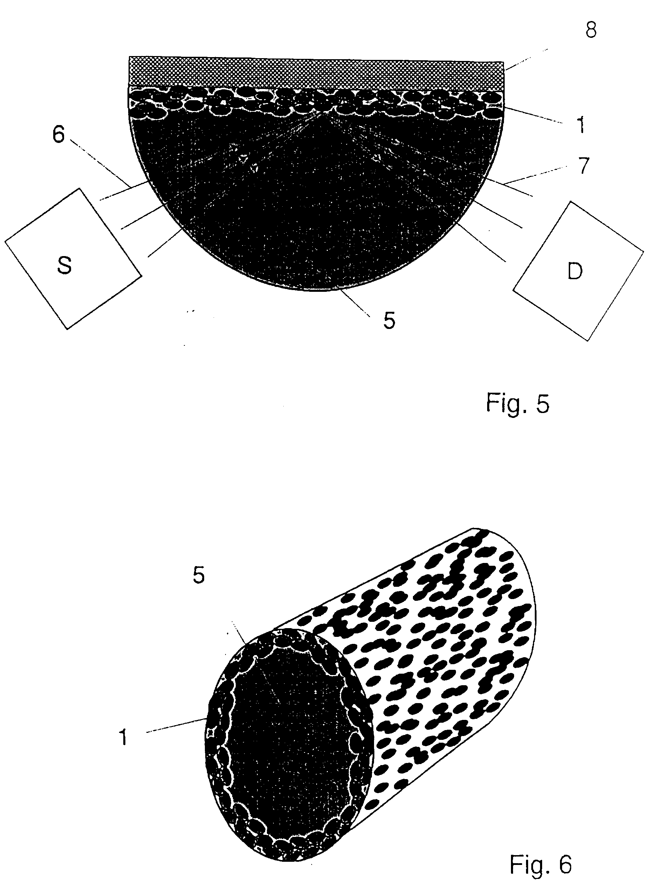

Fig. 5 zeigt die durch Ionenimplantation in eine als Halbzylinder gestaltete optische Trägermatrix 5 eingebrachten Metallcluster. Die implantierte Oberflächenschicht steht in Kontakt mit einem Analyten 8. Zur Messung der Oberflächen - Plasmonen - Resonanz wird die Clusterschicht 1 von der dem Analyten entgegengesetzten Seite beleuchtet. Das einfallende Licht 6 von der Quelle S kann monochromatischer oder polychromatisch mit einer Winkeldispersion sein. Das reflektierte Licht 7, in dem der zur Plasmonenanregung verbrauchte Anteil fehlt, wird von dem Detektor D erfaßt und zur Charakterisierung des Analyten ausgewertet.

Fig. 6 zeigt ein Beispiel für eine als optische Faser gestaltete Matrix 5 mit der durch Ionenimplantation im Mantelbereich gebildeten Clusterschicht 1, die wiederum in Kontakt mit einem Analyten gebracht werden kann. Das Licht in der Faser kann durch periodische Totalreflexion oder durch kontinuierliche Brechung geführt werden. Für entsprechende Meßaufgaben kann eine solche Faser langgestreckt, gewickelt, aufgerollt oder auch mäanderförmig mit dem Analyten in Kontakt gebracht werden.

## Patentansprüche

1. Kompositmaterial zur Resonanzverstärkung optischer Signale, dadurch gekennzeichnet, daß metallische Partikel in einer Festkörpermatrix lateral zu quasi-zweidimensionalen, durch die Matrix fixierten Arrays von Oberflächenheterogenitäten angeordnet sind und vertikal in der planar ausgebildeten Matrixphase verankert sind.

2. Kompositmaterial nach Anspruch 1, dadurch gekennzeichnet, daß die metallischen Partikel vorzugsweise aus Ag, Au, Cu, Al, Ti oder Pt bestehen.

3. Kompositmaterial nach Anspruch 1, dadurch gekennzeichnet, daß die metallischen Partikel eine einheitliche Teilchenform, vorzugsweise sphärisch oder sphäroidal, mit einer Teilchengröße im Bereich zwischen Nanometer und Mikrometer aufweisen.

4. Kompositmaterial nach Anspruch 1, dadurch gekennzeichnet, daß die metallischen Partikel oberflächenseitig frei zugänglich sind.

5. Kompositmaterial nach Anspruch 1, dadurch gekennzeichnet, daß die metallischen Partikel durch einen dünnen Matrixfilm mit einer Schichtdicke von max. 10 nm bedeckt sind.

6. Kompositmaterial nach Anspruch 1, dadurch gekennzeichnet, daß die metallischen Partikel derart angeordnet sind, daß sie elektrisch voneinander isoliert sind.

7. Kompositmaterial nach Anspruch 1, dadurch gekennzeichnet, daß die metallischen Partikel derart angeordnet sind, daß ein direkter Berührungskontakt zwischen ihnen gewährleistet ist.

8. Kompositmaterial nach Anspruch 1, dadurch gekennzeichnet, daß als Matrixmaterial vorzugsweise Dielektrika, Halbleiter oder optisch transparente Materialien, eingesetzt sind.

9. Kompositmaterial nach Anspruch 8, dadurch gekennzeichnet, daß als Matrixmaterial SiO₂, Si₃N₄, TiO₂, Ta₂O₅, Al₂O₃, Glas oder optisch transparentes Silizium eingesetzt ist.

10. Kompositmaterial nach Anspruch 1, dadurch gekennzeichnet, daß das Matrixmaterial als planarer Dünnfilm in einer homogenen Einschicht- oder in einem heterogenen Mehrschichtsystem auf einem mechanischen Träger aufgebracht ist.

11. Kompositmaterial nach Anspruch 1 bzw. 10, dadurch gekennzeichnet, daß die Matrix bzw. deren Träger als planares Element, Faser oder anders regelmäßig geometrisch geformter Körper gestaltet ist.

12. Kompositmaterial nach Anspruch 4, dadurch gekennzeichnet, daß auf der Oberfläche der implantierten metallischen Partikel Molküle oder andere als Rezeptoren fungierende Komponenten immobilisiert sind.

13. Verfahren zur Herstellung des Kompositmaterials zur Resonanzverstärkung optischer Signale entsprechend Anspruch 1, dadurch gekennzeichnet, daß die Bildung, Anordnung und Verankerung der metallischen Partikel in der Festkörpermatrix in einem spontanen Prozeß durch Beschuß der Matrixoberfläche mit einem Ionenstrahl erfolgt, in welchem mindestens die metallische Partikel-Komponente enthalten ist.

14. Verfahren zur Herstellung des Kompositmaterials nach Anspruch 13, dadurch gekennzeichnet, daß der Ionenbeschuß mehrfach wiederholt wird, wobei auch ein Zwischenbeschuß mit Ionen enthalten ist, die nicht mit den metallischen Partikeln identisch sind.

15. Verfahren zur Herstellung des Kompositmaterials nach Anspruch 14, dadurch gekennzeichnet, daß für den Zwischenbeschuß vorzugweise Ionen der Matrixkomponenten oder dem Matrixmaterial gegenüber chemisch indifferenten Ionen eingesetzt werden.

16. Verfahren zur Herstellung von Kompositmaterial nach Anspruch 13, dadurch gekennzeichnet, daß die Matrix durch Standardverfahren der Halbleitertechnologie hergestellt wird.
